# EUROPÄISCHE PATENTSCHRIFT

(11) **EP 1 090 370 B1**
(45) Veröffentlichungstag und Bekanntmachung des Hinweises auf die Patenterteilung: **28.08.2002**
(21) Anmeldenummer: 99917835.3
(22) Anmeldetag: 22.03.1999
(51) Int. Cl.: G06K 7/00, H04L 5/14, H04B 5/00

(54) **VERFAHREN ZUR KOMMUNIKATION ZWISCHEN BERÜHRUNGSLOS ARBEITENDEN DATENTRÄGERN UND ENDGERÄTEN**
METHOD FOR THE COMMUNICATION BETWEEN NON-CONTACT DATA CARRIERS AND TERMINALS
PROCEDE DE COMMUNICATION ENTRE DES SUPPORTS DE DONNEES FONCTIONNANT SANS CONTACT ET DES TERMINAUX

(30) Priorität: 22.06.1998 DE 19827691
(43) Veröffentlichungstag der Anmeldung: 11.04.2001
(73) Patentinhaber: SkiData AG, 5083 Gartenau (AT)
(72) Erfinder: WALLERSTORFER, Kurt, A-5204 Strasswalchen (AT)
(74) Vertreter: Berngruber, Otto, Dr. Dipl.-Chem.
(86) Internationale Anmeldenummer: EP9901932
(87) Internationale Veröffentlichungsnummer: WO99067734

(56) Entgegenhaltungen:
- EP-A- 0 706 151
- GB-A- 2 208 025
- US-A- 4 411 004
- US-A- 5 678 029
- PATENT ABSTRACTS OF JAPAN vol. 016, no. 550 (E-1292), 19. November 1992 (1992-11-19) & JP 04 208795 A (FUJITSU LTD;OTHERS: 01), 30. Juli 1992 (1992-07-30)

## Beschreibung

Die Erfindung bezieht sich auf ein Verfahren zur bidirektionalen Kommunikation zwischen berührungslos arbeitenden Datenträgern und Endgeräten, die mit Einrichtungen zur Ausstrahlung elektromagnetischer Wellen zur nichtgalvanischen, elektromagnetischen Kopplung mit den Datenträgern versehen sind. Sie hat auch einen Datenträger und ein Endgerät zur Durchführung des Verfahrens zum Gegenstand.

Die Einrichtungen der Endgeräte zur Ausstrahlung der elektromagnetischen Wellen sind Spulen und Kondensatoren, Schwingkreise, Optokoppler und dergleichen. Die Datenträger, die als Transponder ausgebildet sind, weisen ebenso Einrichtungen wie Spulen, Kondensatoren, Schwingkreise, Optokoppler, zur nichtgalvanischen Energie- und/oder Datenübertragung auf, so dass die Datenträger mit den Endgeräten, wie Lese/Schreibterminals, Energie und/oder Daten übertragen.

Berührungslos arbeitende Datenträger, beispielsweise berührungslose Chipkarten, werden für die verschiedensten Anwendungen eingesetzt, beispielsweise bei der Benutzung öffentlicher Transportsysteme, als elektronische Geldbörse, Krankenversicherungsausweise und dergleichen. Da die Zahl der Chipkarten, die eine Person mit sich führt, im allgemeinen ständig zunimmt, ist ein Multifunktionsdatenträger anzustreben, der für möglichst viele Anwendungen einsetzbar ist, gegebenenfalls ein einziger persönlicher Datenträger, der praktisch für alle von einer Person in Anspruch genommene Leistungen verwendbar ist.

Je nach der möglichen Datenübertragungsentfernung werden berührungslos arbeitende Datenträger in "close coupling"-Datenträger mit einer Datenübertragungsentfernung zwischen 0 und 2 mm und in "remote coupling"-Datenträger eingeteilt, wobei bei letzteren zwischen "proximity"-Datenträgern mit einer Datenübertragungsentfernung bis 100 mm und "vicinity"- oder "hands free"-Datenträger mit einer Datenübertragungsentfernung von mehr als 100 mm unterschieden wird. Während für manche Anwendungen "close coupling"- oder "proximity"-Datenträger problemlos einsetzbar sind, gibt es andere Anwendungen, für die sich nur "vicinity"-Datenträger eignen. So kann beispielsweise ein elektronisch aufladbares U-Bahnticket ohne weiteres nach dem "touch and go"-Prinzip zur Datenübertragung an das Endgerät gehalten, also als "close coupling"- oder "proximity"-Datenträger ausgebildet sein, während solche Datenträger beispielsweise bei Zugangskontrollanlagen zu Liften beim Skifahren ungeeignet, jedenfalls äußerst umständlich sind, da beispielsweise die Liftkarte an der Kleidung befestigt oder der Datenträger in eine Armbanduhr integriert sein kann.

Die Trägerfrequenz für die Datenübertragung, die zulässige Frequenzbandbreite und die vom Endgerät abgestrahlte Sendeenergie für die berührungslose Datenübertragung zwischen Datenträgern und Endgeräten sind durch einschlägige Bestimmungen geregelt. So wird beispielsweise nach einer ISO-Norm eine Trägerfrequenz von 13,56 MHz vorgeschrieben, wobei nur eine geringe vorgegebene Frequenzbandbreite zulässig ist.

Um für Multifunktionsdatenträger das Problem der unterschiedlichen Datenübertragungsentfernung zu lösen, ist zwar daran zu denken, die abgestrahlte Sendeenergie so zu erhöhen, dass für alle Anwendungen die "vicinity"-Datenübertragungsentfernung gilt. Die maximale Sendeenergie ist jedoch aus physiologischen und anderen Gründen ebenfalls behördlich limitiert. Auch stehen Datenschutzbestimmungen einer "vicinity"-Datenübertragungsentfernung bei manchen Anwendungen eines solchen Multifunktionsdatenträgers entgegen.

Aus WO 98/10364 ist ein Verfahren zur Identifizierung von Chipkarten bekannt, um nur eine bestimmte Chipkarte aus einer Gruppe ähnlicher Karten mit einem Endgerät kommunizieren zu lassen. Auch ist es bekannt, Endgeräte im Sparbetrieb mit geringerer Leistung zu betreiben (z.B. WO 98/01816).

Aus US-A-4 411 004 ist es bekannt, bei einem Sender, der über eine Leitung mit mehreren Empfängern verbunden ist, die Datenübertragung mit unterschiedlichen Übertragungsgeschwindigkeiten durchzuführen, und zwar wird für einen Empfänger mit geringem Abstand vom Sender eine höhere Datenübertragungsgeschwindigkeit verwendet als für einen Empfänger mit großem Abstand.

Aufgabe der Erfindung ist es, ein Verfahren bereitzustellen, mit dem ein und derselbe Datenträger sowohl für Anwendungen mit kleiner wie mit großer Datenübertragungsentfernung eingesetzt werden kann.

Dies wird erfindungsgemäß durch das im Anspruch 1 angegebene Verfahren erreicht.

Erfindungsgemäß wird die Geschwindigkeit der Datenübertragung in Abhängigkeit von der zu überbrückenden Entfernung der Datenübertragung geändert.

Je höher die Datenübertragungsentfernung ist, desto höher muss die vom Endgerät abgestrahlte Sendeenergie sein. Wie vorstehend ausgeführt, ist die maximal zulässige abgestrahlte Sendeenergie jedoch durch administrative Bestimmungen nach oben begrenzt. Je höher die benutzte Datenübertragungsgeschwindigkeit und je kürzer dadurch die Transaktionszeit des Bearbeitungsvorgangs im Gerät gewählt wird, desto höher ist aber die durch den Datenübertragungsvorgang beanspruchte Frequenzbandbreite. Je nach verwendeter Trägerfrequenz ist aber auch die Frequenzbandbreite durch entsprechende Vorschriften limitiert.

Während bei einer geringen Datenübertragungsgeschwindigkeit eine geringe Frequenzbandbreite vorliegt und damit eine hohe Sendeleistung des Endgeräts, also eine große Datenübertragungsentfernung möglich ist, ist bei einer hohen Datenübertragungsgeschwindigkeit die Frequenzbandbreite erheblich größer, so dass erfindungsgemäß die Sendeleistung und damit die Datenübertragungsentfernung reduziert wird, um den einschlägigen Bestimmungen zu genügen.

Das heißt, erfindungsgemäß erfolgt beispielsweise bei "remote coupling"-, insbesondere "vicinity"-Anwendungen eine Datenübertragung mit geringer Geschwindigkeit, während beispielsweise bei "proximity"- und insbesondere bei "close coupling"-Anwendungen eine hohe Datenübertragungsgeschwindigkeit vorgesehen ist.

Damit kann erfindungsgemäß ein und derselbe Datenträger für die Überbrückung von geringen und hohen Datenübertragungsentfernungen eingesetzt werden, und zwar unter Beachtung der einschlägigen Grenzwerte bezüglich der Frequenzbandbreite und der abgestrahlten elektromagnetischen Energie.

Nach der Erfindung sind die Endgeräte und die Datenträger also so ausgebildet, dass die Datenträger beispielsweise sowohl für den Einsatz als "vicinity"-Datenträger als auch für den Einsatz als "proximity"-Datenträger als auch für den Einsatz als "close coupling"-Datenträger geeignet sind. Damit kann für die jeweilige Anwendung des Datenträgers eine möglichst hohe, der zu überbrückenden Datenübertragungsentfernung angepaßte Datenübertragungsgeschwindigkeit benutzt werden.

Vorzugsweise werden zur Durchführung des erfindungsgemäßen Verfahrens Endgeräte verwendet, die eine Steuerung zur Änderung ihrer Sendeleistung in Abhängigkeit von der Datenübertragungsgeschwindigkeit besitzen. Damit können erfindungsgemäß zugleich konventionelle Datenträger, also Datenträger, die nur mit einer einzigen Datenübertragungsgeschwindigkeit kommunizieren, ohne Störung der Funktion und unter Einhaltung der genannten einschlägigen Vorschriften eingesetzt werden.

Weiterhin ist erfindungsgemäß der Datenträger zur Durchführung des erfindungsgemäßen Verfahrens vorzugsweise derart ausgebildet, dass er in Abhängigkeit von der Datenübertragungsentfernung mit unterschiedlicher Datenübertragungsgeschwindigkeit kommuniziert. Damit können erfindungsgemäß auch konventionelle Endgeräte, also Endgeräte, deren Sendeleistung nicht in Abhängigkeit von der Datenübertragungsgeschwindigkeit steuerbar ist, ohne Störung der Funktion und unter Einhaltung der einschlägigen Vorschriften verwendet werden.

Mit anderen Worten, das erfindungsgemäße Verfahren, das bei einer hohen Datenübertragungsgeschwindigkeit eine geringe Sendeleistung des Endgeräts und damit eine geringe Datenübertragungsentfernung und bei einer geringen Datenübertragungsgeschwindigkeit eine hohe Sendeleistung des Endgeräts und damit eine große Datenübertragungsentfernung vorsieht, kann durch einen Datenträger, der in Abhängigkeit von der Datenübertragungsentfernung mit unterschiedlicher Datenübertragungsgeschwindigkeit kommuniziert und/oder ein Endgerät, dessen Sendeleistung in Abhängigkeit von der Datenübertragungsgeschwindigkeit steuerbar ist, verwirklicht werden.

Die Änderung der Geschwindigkeit der Datenübertragung in Abhängigkeit von der zu überbrückenden Datenübertragungsentfernung erfolgt vorzugsweise durch einen zusätzlichen Kommunikationsschritt am Beginn der Datenübertragung.

Bei diesem zusätzlichen Kommunikationsschritt werden die einschlägigen Vorschriften bezüglich abgestrahlter Energie, beanspruchtem Übertragungsfrequenzband sowie physiologischer Unbedenklichkeit eingehalten, wobei sowohl erfindungsgemäße Datenträger an konventionellen Endgeräten ohne Störung der Funktion und unter Einhaltung der genannten einschlägigen Vorschriften verwendet werden können, als auch erfindungsgemäße Endgeräte, um konventionelle Datenträger ohne Störung der Funktion und unter Einhaltung der einschlägigen Vorschriften lesen und schreiben zu können.

Dieser zusätzliche Kommunikationsschritt kann so aufgebaut sein, dass entweder das erfindungsgemäße Endgerät vor Beginn der Kommunikation an die Datenträger ein Signalmuster als Kennung für die zu wählende Datenübertragungsgeschwindigkeit aussendet. Damit für dieses Endgerät auch konventionelle Datenträger verwendet werden können, darf dieses Signalmuster von den konventionellen Datenträgern nicht mißinterpretiert werden können, derart, dass eine Störung und Beeinflussung der anschließenden Datenübertragung auftritt.

Die Aussendung eines solchen Signalmusters als Kennung für die zu wählende Datenübertragungsgeschwindigkeit vor Beginn der Kommunikation gilt für solche Systeme, bei denen die DAtenträger nach der Annäherung an das vom Endgerät ausgestrahlte elektromagnetische Feld auf ein Kommando des Endgerätes warten, bevor sie mit der Übertragung von Daten an das Endgerät beginnen.

Ein solches beispielsweise für die Zugangskontrolle zu einem Skilift verwendetes Endgerät sendet also blind ein Signalmuster für die "vicinity"-Anwendung aus, also ein eine geringe Datenübertragungsgeschwindigkeit kennzeichnendes Signalmuster, wobei ein Datenträger, der in dieses von diesem Endgerät ausgestrahlte elektromagnetische Feld eingebracht wird, mit der für dieses Endgerät bestimmten langsamen Datenübertragungsgeschwindigkeit zum Endgerät zurücksendet, ohne dass die Sendeleistung des Endgerätes geändert wird.

Alternativ zu dem vorstehend erwähnten System existieren Verfahren, bei denen die Datenträger nach der Annäherung an das vom Endgerät ausgestrahlte elektromagnetische Feld spontan mit der Übertragung der Daten beginnen. Bei einem erfindungsgemäßen Endgerät und einem erfindungsgemäßen Datenträger, die nach dem letzteren Verfahren arbeiten, kann das erfindungsgemäße Endgerät, nachdem die erfindungsgemäßen Datenträger nach Annäherung an das vom Endgerät ausgestrahlte elektromagnetische Feld spontan mit der Datenübertragung in einer vorgegebenen Datenübertragungsgeschwindigkeit begonnen haben, ein Signalmuster als Kennung für die weitere Datenübertragung zu wählende Datenübertragungsgeschwindigkeit aussenden. Dabei wird ein Signalmuster verwendet, welches von konventionellen Datenträger, also von Datenträgern, die das erfindungsgemäße Verfahren nicht beherrschen, nicht mißinterpretiert werden kann und daher zu keiner Störung und Beeinflussung der anschließenden Datenübertragung führen.

Das heißt, wenn beispielsweise mit hoher Datenübertragungsentfernung, also niedriger Datenübertragungsgeschwindigkeit gearbeitet werden soll, und der Datenträger hat bei Annäherung an das elektromagnetische Feld des Endgeräts spontan mit einer hohen Datenübertragungsgeschwindigkeit zu senden begonnen, erhält er für die weitere Datenübertragung vom Endgerät ein Signalmuster, das ihm den Befehl erteilt, jetzt auf die niedrige Datenübertragungsgeschwindigkeit zu schalten.

Das Signalmuster als Kennung für die jeweilige Datenübertragungsgeschwindigkeit kann beispielsweise nach einem bestimmten Muster amplitudenmoduliert sein. Beispielsweise ist eine "single side band"- oder SSB-Modulation möglich oder eine Phasenmodulation.

Das Signalmuster als Kennung für die für die weitere Datenübertragung zu wählende Datenübertragungsgeschwindigkeit kann auch ein während der üblichen, nachfolgenden Kommunikation verwendetes Telegramm sein, welches in der für die weitere Datenübertragung verwendeten Datenübertragungsgeschwindigkeit an die Datenträger übermittelt wird. Das heißt, wenn das Endgerät beispielsweise mit niedriger Datenübertragungsgeschwindigkeit sendet, senden die Datenträger nur Daten mit geringer Geschwindigkeit zurück.

Als Kennung für die für die Datenübertragung zu wählende Datenübertragungsgeschwindigkeit kann ferner ein entsprechendes Datenbitsignal verwendet werden oder ein entsprechendes Protokoll. Auch kann die Kennung durch ein entsprechendes Datensignal vor dem Protokoll erfolgen.

Die Anpassung der Datenübertragungsgeschwindigkeit bezieht sich erfindungsgemäß auf die Datenübertragung vom Endgerät zum Datenträger. Insbesondere wenn das Endgerät eine so geringe Empfangsempfindlichkeit besitzt, dass vom Datenträger mit hoher Datenübertragungsgeschwindigkeit gesendete Daten nicht mehr gelesen werden können, kann sich die Anpassung der Datenübertragungsgeschwindigkeit jedoch auch auf die Datenübertragung vom Datenträger zum Endgerät oder auf beide Übertragungsrichtungen beziehen.

Nach dem erfindungsgemäßen Verfahren erfolgt eine Kommunikation zwischen berührungslos arbeitenden Datenträgern und berührungslos arbeitenden Endgeräten, wobei in das vom Endgerät abgestrahlte elektromagnetische Feld eine oder mehrere Datenträger, welche als Transponder ausgebildet sind, also zum Datenempfang und zur Datenübertragung Spulen und andere geeignete Einrichtungen aufweisen, zum Zweck der berührungslosen, nichtgalvanischen, elektromagnetischen Kopplung und bidirektionalen Datenübertragung gebracht werden.

Bei Verwendung des erfindungsgemäßen Datenträgers, also von Datenträgern, die in Abhängigkeit von der Datenübertragungsentfernung mit unterschiedlicher Datenübertragungsgeschwindigkeit kommunizieren, sowie bei Verwendung des erfindungsgemäßen Endgeräts, also eines Endgeräts, das zur Änderung seiner Sendeleistung in Abhängigkeit von der Datenübertragungsgeschwindigkeit steuerbar ist, gestattet das erfindungsgemäße Verfahren die Anpassung der Datenübertragungsgeschwindigkeit an die zu überbrückende Datenübertragungsentfernung, so dass unter Einhaltung der einschlägigen Vorschriften eine höchstmögliche Datenübertragungsgeschwindigkeit bei gegebener Datenübertragungsentfernung erzielt werden kann.

Die Sendeleistung des Endgerätes in Abhängigkeit von der Datenübertragungsgeschwindigkeit wird in Stufen geändert. Beispielsweise ist es möglich, eine Umschaltung der Sendeleistung des Endgerätes in lediglich zwei Stufen vorzunehmen, nämlich für eine geringe, beispielsweise "proximity"-Datenübertragungsentfernung und in eine große, beispielsweise "vicinity"-Datenübertragungsentfernung.

Der Datenträger kann in unterschiedlicher Weise ausgeführt sein, beispielsweise in Form einer Karte, einer Armbanduhr, eines Armbandes oder eines Schlüsselanhängers.

Nachstehend ist die Erfindung anhand der beigefügten Zeichnungen beispielhaft näher erläutert. Darin zeigen:
- Fig. 1: ein Diagramm, das die maximale Sendeleistung des Endgerätes in Abhängigkeit von der Frequenzbandbreite wiedergibt;
- Fig. 2: schematisch die Darstellung der Kombination aus dem erfindungsgemäßen Datenträger und dem erfindungsgemäßen Endgerät.

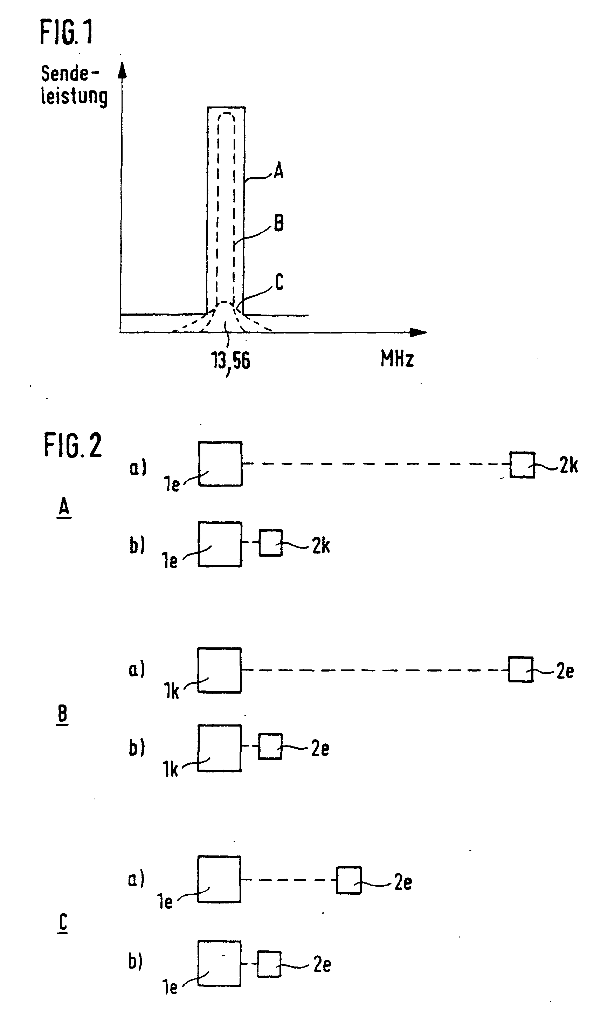

In Fig. 1 ist die maximal zulässige Sendeleistung des Endgerätes und die maximal zulässige Frequenzbandbreite bei einer bestimmten Trägerfrequenz durch die mit ausgezogenen Linien wiedergegebene Kurve A dargestellt. Während bei einer geringen Datenübertragungsgeschwindigkeit gemäß der gestrichelt dargestellten Linie B eine geringe Frequenzbandbreite auftritt und damit die maximal zulässige Sendeleistung des Endgerätes, also eine große Datenübertragungsentfernung möglich ist, ist gemäß der gepunkteten Linie C bei hoher Datenübertragungsgeschwindigkeit die Frequenzbandbreite erheblich größer und damit nur eine geringe Sendeleistung bzw. eine geringe Datenübertragungsentfernung möglich.

In Fig. 2 ist mit 1e ein erfindungsgemäßes Endgerät dargestellt, also ein Endgerät, dessen Sendeleistung in Abhängigkeit von der Datenübertragungsgeschwindigkeit steuerbar ist, mit 1k ein konventionelles Endgerät ohne eine derartige Steuerung der Sendeleistung, mit 2e ein erfindungsgemäßer Datenträger, der in Abhängigkeit von der Datenübertragungsentfernung mit unterschiedlicher Datenübertragungsgeschwindigkeit kommuniziert, und mit 2k ein konventioneller Datenträger, dessen Kommunikationsfähigkeit auf eine einzige Datenübertragungsgeschwindigkeit beschränkt ist. Gemäß den Varianten A und B kann das erfindungsgemäße Verfahren auch durchgeführt werden, wenn konventionelle Datenträger 2k mit erfindungsgemäßen Endgeräten (A) kommunizieren bzw. konventionelle Endgeräte 1k mit erfindungsgemäßen Datenträgern (B). Nach der Variante (C), bei der ein erfindungsgemäßes Endgerät und ein erfindungsgemäßer Datenträger verwendet werden, kann eine höchstmögliche Datenübertragungsgeschwindigkeit sowohl bei großer Datenübertragungsentfernung (a) wie bei geringer Datenübertragungsentfernung (b) erzielt werden.

## Patentansprüche

1. Verfahren zur bidirektionalen Kommunikation zwischen berührungslos arbeitenden Datenträgern und Endgeräten, die mit Einrichtungen zur Ausstrahlung elektromagnetischer Wellen zur nichtgalvanischen, elektromagnetischen Kopplung mit den Datenträgern versehen sind, **dadurch gekennzeichnet, dass** die Geschwindigkeit der Datenübertragung in Abhängigkeit von der zu überbrückenden Entfernung der Datenübertragung durch einen zusätzlichen Kommunikationsschritt am Beginn der Datenübertragung festgelegt und die Sendeleistung des Endgerätes in Abhängigkeit von der Datenübertragungsgeschwindigkeit in Stufen geändert wird.

2. Verfahren nach Anspruch 1, **dadurch gekennzeichnet, dass** der zusätzliche Kommunikationsschritt derart aufgebaut ist, dass das Endgerät vor Beginn der Kommunikation ein Signalmuster als Kennung für die jeweilige Datenübertragungsgeschwindigkeit aussendet.

3. Verfahren nach Anspruch 2, **dadurch gekennzeichnet, dass** das Signalmuster als Kennung für die jeweilige Datenübertragungsgeschwindigkeit amplituden- und/ oder phasenmoduliert ist.

4. Verfahren nach Anspruch 1, **dadurch gekennzeichnet, dass** die Änderung der Sendeleistung des Endgerätes in zwei Stufen für eine geringe bzw. eine größere Datenübertragungsentfernung erfolgt.

5. Einrichtung zur Durchführung des Verfahrens nach einem der Ansprüche 1 bis 4, **dadurch gekennzeichnet, dass** das Endgerät für eine von der Datenübertragungsentfernung abhängige Datenübertragungsgeschwindigkeit mit einer Steuerung zur Festlegung der der zu überbrückenden Datenübertragungsentfernung entsprechenden Datenübertragungsgeschwindigkeit durch einen zusätzlichen Kommunikationsschritt am Beginn der Datenübertragung und zur stufenweisen Änderung seiner Sendeleistung in Abhängigkeit von der Datenübertragungsgeschwindigkeit versehen ist und der Datenträger in Abhängigkeit von der Datenübertragungsentfernung zur Kommunikation mit unterschiedlicher Datenübertragungsgeschwindigkeit ausgebildet ist.

## Claims

1. A method for bidirectional communication between contactless-type data carriers and terminals which are provided with devices for radiating electromagnetic waves for nongalvanic, electromagnetic coupling with the data carriers, **characterized in that** the data transfer rate is fixed by an additional communication step at the onset of data transfer in accordance with the distance of data transfer to be bridged, and the transmitting power of the terminal is varied in steps in accordance with the data transfer rate.

2. A method according to claim 1, **characterized in that** the additional communication step is constructed such that the terminal emits a signal pattern before the onset of communication as an identification code for the particular data transfer rate.

3. A method according to claim 2, **characterized in that** the signal pattern as an identification code for the particular data transfer rate is amplitude- and/or phase-modulated.

4. A method according to claim 1, **characterized in that** the transmitting power of the terminal is varied in two steps for a small data transfer distance and a larger data transfer distance.

5. A device for carrying out the method according to any of claims 1 to 4, **characterized in that** the terminal is provided for a data transfer rate dependent on the data transfer distance with control means for fixing the data transfer rate corresponding to the data transfer distance to be bridged by an additional communication step at the onset of data transfer and for varying its transmitting power in steps in accordance with the data transfer rate, and the data carrier is designed for communication at different data transfer rates in accordance with the data transfer distance.

## Revendications

1. Procédé de communication bidirectionnelle entre des supports de données fonctionnant sans contact et des postes terminaux qui sont pourvus de dispositifs d'émission d'ondes électromagnétiques pour réaliser un couplage électromagnétique non galvanique avec les supports de données, **caractérisé en ce que** la vitesse de transmission de données est déterminée en fonction de la distance de transmission de données à surmonter, par une étape de communication additionnelle au début de la transmission de données et **en ce que** la puissance d'émission du poste terminal est modifiée par étapes en fonction de la vitesse de transmission des données.

2. Procédé selon la revendication 1, **caractérisé en ce que** l'étape de communication additionnelle est constituée de telle sorte qu'avant le début de la communication, le poste terminal émet un modèle de signal servant d'indicatif pour la vitesse respective de transmission de données.

3. Procédé selon la revendication 2, **caractérisé en ce que** le modèle de signal servant d'indicatif pour la vitesse respective de transmission de données est modulé en amplitude et/ou en phase.

4. Procédé selon la revendication 1, **caractérisé en ce que** la modification de la puissance d'émission du poste terminal a lieu en deux étapes pour une distance de transmission de données faible et pour une distance plus importante, respectivement.

5. Dispositif de mise en oeuvre du procédé selon l'une des revendications 1 à 4, **caractérisé en ce que** pour une vitesse de transmission de données dépendant de sdistance de la transmission de données, le poste terminal est pourvu d'une commande pour déterminer la vitesse de transmission de données correspondant à la distance de transmission de données à surmonter par une étape de communication additionnelle au début de la transmission de données et pour modifier par étapes sa puissance d'émission en fonction de la vitesse de transmission de données, et **en ce que** le support de données est réalisé en fonction de la distance de transmission de données pour la communication avec différentes vitesses de transmission de données.
